(19)

Europäisches
Patentamt
European
Patent Office
Office européen
des brevets

(11) **EP 4 517 526 A1**

(12) **EUROPEAN PATENT APPLICATION**

(43) Date of publication:
**05.03.2025 Bulletin 2025/10**

(21) Application number: **24184525.4**

(22) Date of filing: **26.06.2024**

(51) International Patent Classification (IPC):
*G06F 9/48* (2006.01)

(52) Cooperative Patent Classification (CPC):
**G06F 9/4881; G06F 9/4887;** G06F 2209/5017;
G06F 2209/503

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.08.2023 US 202318239684**

(71) Applicant: **SAP SE
69190 Walldorf (DE)**

(72) Inventor: **S, Anbusivam
69190 Walldorf (DE)**

(74) Representative: **Müller-Boré & Partner
Patentanwälte PartG mbB
Friedenheimer Brücke 21
80639 München (DE)**

(54) **EMBEDDED SCHEDULER FOR COMPUTER-IMPLEMENTED PROCESSES**

(57)    Techniques and solutions are provided for improving the performance of scheduled, computer-implemented tasks. A scheduler client can include an embedded scheduler. The embedded scheduler can monitor resource use by the scheduler client during execution of instances of a scheduled job. The embedded scheduler can also monitor resource used by targets of the scheduler client. The embedded scheduler can improve parallelization of subtasks for an instance of a scheduled job. Multiple instances of the scheduler client can be created to provide additional resources to be used in executing schedule instances. The multiple instances of the scheduler client can share access to information regarding schedule instances, such as to assist in selection of schedule instances to be executed by a particular scheduler client.

FIG. 1

## Description

### FIELD

The present disclosure generally relates to scheduling of computer-implemented processes and execution of such computer-implemented processes.

### BACKGROUND

Many computer implemented processes are performed according to a schedule. Often, an external scheduler is used to trigger particular processes. Often, in performing a task, it is desirable to perform process operations in parallel. For example, an overall task, such as the retrieval of data, may be broken up into multiple subtasks, such as where multiple subtasks retrieve different portions of an overall data set. In at least some cases, these subtasks can be performed in parallel. Subtasks can be executed by a single instance of a software process, or can be executed by multiple instances of a software process.

While processing subtasks in parallel can be desirable, it can be difficult to control a degree of parallelization using typical external schedulers. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Techniques and solutions are provided for improving the performance of scheduled, computer-implemented tasks. A scheduler client can include an embedded scheduler. The embedded scheduler can monitor resource use by the scheduler client during execution of instances of a scheduled job. The embedded scheduler can also monitor resource used by targets of the scheduler client. The embedded scheduler can improve parallelization of subtasks for an instance of a scheduled job. Multiple instances of the scheduler client can be created to provide additional resources to be used in executing schedule instances. The multiple instances of the scheduler client can share access to information regarding schedule instances, such as to assist in selection of schedule instances to be executed by a particular scheduler client.

In one aspect, the present disclosure provides a process of executing a scheduled job. A schedule handler interface is implemented by a scheduler client. A schedule handler is instantiated for the scheduler client. A schedule is defined that identifies a job and an execution frequency.

It is determined that an instance of the schedule is to be executed based on the execution frequency. An execution instance for the instance of the schedule handler is instantiated.

At least a portion of the job of the instance of the schedule is selected by the execution instance for execution. The execution instance identifies the at least the portion of the job as selected. The execution instance executes the at least the portion of the job.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 is a diagram illustrating a computing environment having a schedule handler and associated components according to the present disclosure in use with an innovative pull service that provides a pull framework useable by a variety of consumers.

FIG. 2 is a diagram illustrating the pull service of FIG. 1, providing additional details for the schedule handler and the pull framework.

FIG. 3 are example interface and class definitions that can be used in implementing the schedule handler and pull framework of FIGS. 1 and 2.

FIG. 4 is a timing diagram illustrating the operation of a pull framework in conjunction with a schedule handler.

FIG. 5 is a timing diagram illustrating a process of expanding a scheduled job to provide executable instances of the scheduled job.

FIG. 6 is a timing diagram illustrating a process of executing a scheduled job for the pull framework of FIGS. 1 and 2.

FIG. 7 is a diagram of a computing environment illustrating how a scheduler can be used by multiple scheduler clients.

FIG. 8 illustrates flowcharts for processes of retrying failed tasks.

FIG. 9 is a flowchart of job execution process performed using a scheduler handler by a scheduler client implementing a scheduler handler interface.

FIG. 10 is a diagram of an example computing system in which some described embodiments can be implemented.

FIG. 11 is an example cloud computing environment that can be used in conjunction with the technologies described herein.

## DETAILED DESCRIPTION

### Example 1 - Overview

Many computer implemented processes are performed according to a schedule. Often, an external scheduler is used to trigger particular processes. Often, in performing a task, it is desirable to perform process operations in parallel. For example, an overall task, such as the retrieval of data, may be broken up into multiple subtasks, such as where multiple subtasks retrieve different portions of an overall data set. In at least some cases, these subtasks can be performed in parallel. Subtasks can be executed by a single instance of a software process, or can be executed by multiple instances of a software process.

While processing subtasks in parallel can be desirable, it can be difficult to control a degree of parallelization using typical external schedulers. Accordingly, room for improvement exists.

As more particular examples of issues that can arise with external schedulers, it may be difficult to control how many tasks are performed by particular instances of a software process. Thus, an external scheduler can result in too many tasks being performed by a particular instance, which can overload the resources available to an instance. Similarly, an external scheduler can result in too few tasks being performed by an instance, which can delay execution of an overall job, or cause the creation of additional process instances, which can consume unnecessary computing resources.

Tasks performed by a particular process instance can be executed against a particular target. For example, a particular use of a disclosed scheduling technique that is described in the present disclosure involves pulling data from one or more applications. An overall task may be to pull a particular data set (such as data satisfying particular criteria) from an application, and may be broken into multiple subtasks. For example, data to be retrieved for an overall time period can be divided into a number of smaller time periods, where each subtask can correspond to a smaller time period. Or, if a data set is determined to return a particular number of results, the number of results can be pulled in particular batch sizes.

The target of one or more process instances may have a limited capacity to respond to requests associated with an overall job, such as subtasks in executing a particular job schedule instance. Again, it may be difficult to control how many subtasks are sent a particular target using an external scheduler.

Disclosed techniques provide schedulers that are integrated into particular instances of a scheduler client, such as a particular application or process thereof. These schedulers can be loosely coupled, such as by storing tasks status information for particular tasks/subtasks. In this way, for example, an instance can select from tasks to be performed that are in a "ready for scheduling" state, where once a task is selected for execution, it can be set to an "active" or "in process" state, where tasks in this state are not selected for processing by instances.

Disclosed scheduling processes can be associated with various methods of retrying failed tasks. For example, a task can be retried at fixed intervals, or can be retried if it is determined that another task, such as a task associated with a particular task target, has succeeded. If desired, a maximum number of retry attempts can be specified.

Disclosed techniques can provide for load-based scheduling. For example, particular process instances can select tasks for execution according to their available resources. In some cases, including when multiple different job schedule instances are to be executed, a number of process instances used to execute operations involved in executing the job schedules instances can be increased or decreased based on certain factors, including a lag in job schedule instance execution. For example, if a job schedule instance is scheduled to be performed at a particular time, and remains unexecuted for a time exceeding a particular threshold, additional execution instances can be created. Execution instances can be removed if job schedule instances are being executed within a particular threshold time, or an amount of available execution instance resources are unused.

As discussed, disclosed schedulers can be capable of executing multiple job schedule instances, either for the job schedule type or for different job schedule types (that is, for the same scheduler client or for different scheduler clients). Some job schedule instances may have a higher priority than others. For example, some targets or job schedules may be designated as having a lower or higher priority. Priorities can also be set, for example, using time-based criteria. In one scenario, more operations for more recent schedule instances can be prioritized over older schedule instances, or vice versa. Accordingly, some operations for some job schedule instances can be performed before operations for other job schedule instances, or a number of worker processes to be assigned to a particular task schedule instance or job schedule instance being executed thereby can be weighted in accordance with different task priorities.

Historical job schedule instance execution data can be used to guide later executions of a particular job schedule

EP 4 517 526 A1

instance. For example, a number of execution instances, or a number of worker processes thereof, that are active/assigned to a particular task can be selected based on historical patterns, which can help optimize computer resource usage and reduce job schedule instance execution time.

A particular use scenario that is discussed in conjunction with disclosed schedulers relates to pulling data from particular data sources, such as particular applications. In a particular implementation, pull processes can be associated with a pull framework. The pull processes, including the pull framework, can therefore serve as a particular scheduler client. The pull framework can provide a base set of services that can be used with different targets. Typically, different targets are associated with different properties, such as different data formats, authentication credentials, or authentication mechanisms. Different targets can also be associated with different scheduling parameters, such as schedule frequency, retry polices, whether sub tasking is supported, and a degree of parallelization that is allowed. Configuration information can be stored for particular targets, or target types.

The pull framework can provide an interface that can be implemented for different targets. That is, the plugin code can implement particular interface methods used by the pull framework, and can include custom code for, for example, defining subtasks, retrieving particular data from the target, or processing target data, such as filtering or converting data received from a target.

## Example 2 - Example Pull Service with Embedded Schedule Handler

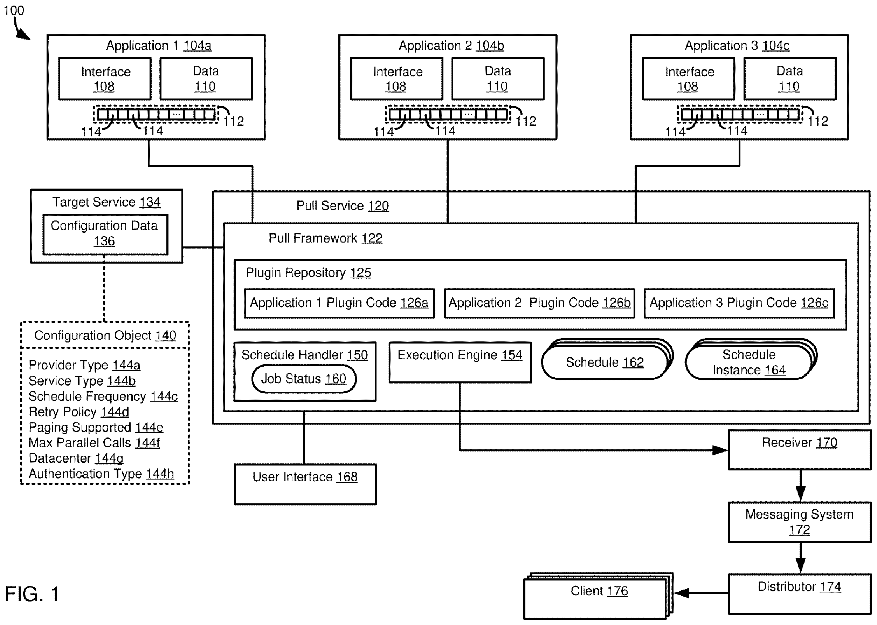

FIG. 1 illustrates an example computing environment 100 in which disclosed techniques can be implemented. In general, the computing environment 100 includes components associated with a scheduler according to the present disclosure and with a pull collection framework according to the present disclosure. Although the scheduler and pull collection framework are shown and described as being used together, it should be appreciated that these aspects of the present disclosure can be used independently. For example, the scheduler can be used to schedule and execute job instances for processes other than the pull collector. Similarly, job schedule instances associated with the pull collection framework can be scheduled and executed using schedulers other than those described herein.

The computing environment 100 includes a plurality of applications 104 (shown as applications 104a, 104b, 104c). The applications 104 can represent targets against which particular job schedule instances, including particular subtasks thereof, will be executed.

An application 104 typically provides an interface 108 that can be used to access data 110 associated with the application. As will be further described, data 110 from an application can, at least in some cases, be split into subsets. Assume, for example, that data 110 responsive to a particular request corresponds to 100 individual elements, such as instances of a particular data type. In some cases, all 100 elements can be transferred together. However, in many cases, it can be useful to transfer the 100 elements in particular subsets, such as having 10 transfers of 10 elements each. In some cases, transferring all 100 elements may exceed the capacity of the application 104, or a particular medium used for the transfer. Or, transfer of the 100 elements can be performed more quickly by transferring multiple subsets of the data 110 concurrently.

Each application 104 is shown as having an overall data set 112 that is responsive to a particular request, that can be divided into a plurality of subsets 114, where each subset includes one or more data elements of the overall data set. The subsets 114 can also be referred to as "pages."

The computer environment further includes a pull service 120. The pull service 120 includes a pull framework 122. The pull framework 122 can facilitate the collection of data from multiple targets, such as data 110 of the applications 104.

Different applications 104 can be used with the pull framework 122 using "plugin code" 126 (shown as 126a-126c) of a plugin repository 125. Plugin code refers to computing code that performs functions such as determining data to be retrieved from an application 104, obtaining data from the application, determining whether the use of the pull framework with the application has been enabled, or identifying a particular provider type associated with the application. In a particular example, the pull framework 122 defines a software interface, and code that implements the interface can be defined for a given application 104, which then serves as the plugin code 126 for the application.

Configuration data 136 for an application 104, a specific instance of which can be referred to as a target, can be stored by a target service 134. A particular example of how configuration data 136 can be stored is provided in a definition 140 for a configuration object. As shown, the configuration object definition 140 includes a plurality of attributes 144 (shown as attributes 144a-144h), which can be implemented as data members of an abstract or composite data type, in a particular implementation. In another example, configuration object definitions can be maintained as records in a particular database table, where the attributes 144 can correspond to columns of the table.

The attributes 144 include a provider type attribute 144a and a service type attribute 144b. A provider can refer to a particular data source, such as a particular application 104, that is identified by the provider type attribute 144a.

A provider can have multiple services, where a given service can also serve as a specific data source. The service type attribute 144b can be used to identify a particular service of a particular provider. Thus, for example, a given provider can be associated with multiple instances of the configuration object definition 140, such as having an instance for each service type associated with the provider.

A schedule frequency attribute 144c can be used to determine how frequently a schedule should be executed. That is, the schedule frequency attribute 144c defines when schedule instances will be executed. As will be described, in some implementations, schedule instances can be created prior to a time at which they will be executed. For the particular use of a scheduler according to the present disclosure with the pull framework 122, the schedule frequency attribute 144c can be used to determine how often a target should be queried for data to be pulled from the target. In some cases, a default schedule frequency can be set for a particular value of the provider type 144a or the service type 144b. However, these values can be overridden for a particular instance of the configuration object 140.

In some cases, attempts to execute a scheduled job, such as a data retrieval job, can fail. It can be beneficial to retry executing the schedule instance, or particular subtasks thereof, one or more times. However, it also can be beneficial to limit a number of retry attempts, including because at some point the schedule instance can be sufficiently "stale" that it is no longer of interest, or because continuing to retry schedule instances can undesirably compete for computing resources with "new"/more recent schedule instances, or for schedule instances that have undergone fewer retry attempts or which otherwise have a higher priority. Accordingly, a retry policy can be specified in an attribute 144d.

One example of a retry policy is to retry a failed job schedule instance, or subtask thereof, at particular time intervals, such as every five minutes, optionally up to a set number of retry attempts. Another example of a retry policy is to retry a failed job schedule instance/subtask once another job schedule instance/subtask has been determined to have been successfully executed (or at least initiated). In some cases, a schedule instance is broken up into subtasks, and a failed subtask of the subtasks can be retried when it determined that another subtask of the schedule instance has succeeded. In another example, a schedule instance or subtask thereof can be retried when an unrelated schedule instance, or subtask thereof, succeeds with respect to the same target. Optionally, a maximum number of retry attempts can be specified.

Generally, it can be beneficial to parallelize aspects of a schedule instance to be executed according to a schedule. In the example of the pull framework 122, it can be beneficial to parallelize operations in the execution of a particular instance of a process to retrieve data from an application 104. One way of parallelizing a data retrieval process is by retrieving data in a number of "pages," where a page represents a particular way of dividing data. For example, a page can be defined with respect to a particular size (for example, in bytes) or with respect to a number of data elements (for example, a number of records of relational data).

Various applications 104 may or not support paging. Even among applications 104 that support paging, paging may be implemented in different ways. Along with how pages are defined, different applications 104 may support different degrees of parallelization, such as a number of parallel calls. Accordingly, an attribute 144e can be used to indicate whether a particular provider/service support pages, while an attribute 144f can be used to indicate a maximum number of parallel operations when parallelization is supported.

In some cases, multiple instances of a provider type, or even both a provider type and a service type, can exist. For example, a large company may have multiple data centers, such as a data center for European operations and a data center for North American operations, where both data centers include a common provider type/service type combination. Thus, an instance of the configuration object definition 140 can specify a particular data center using an attribute 144g. In some cases, multiple instances of a configuration object definition 140 can exist for a common combination of provider type and service type, differing in the data center specified using the attribute 144g.

Typically, a request to access an application 104 requires authorization. An authentication type can be specified using an attribute 144h. Examples of authentication types can include OAuth (Open Authorization), basic authentication (such as username and password), token-based authorization, Security Assertion Markup Language, OpenID Connect (which can use OAuth), Lightweight Directory Access Protocol, certificate-based authentication, API keys, or Kerberos.

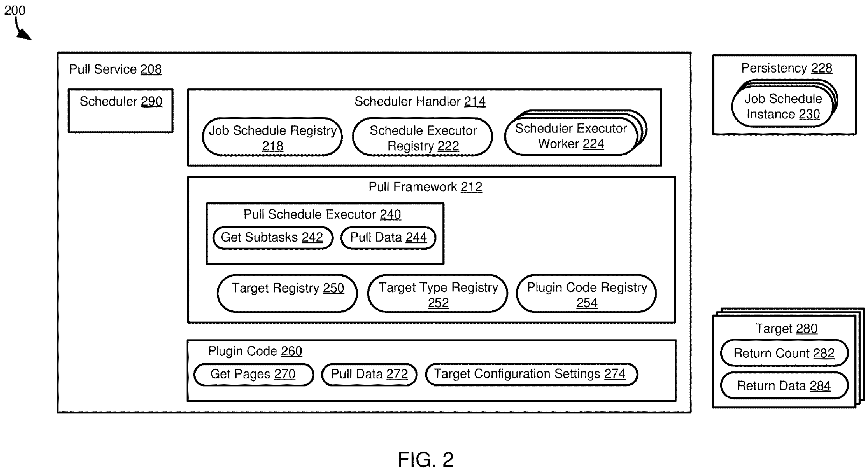

The pull framework 122 further includes a schedule handler 150. The scheduler handler 150 can also be referred to as a scheduler. As will be discussed with respect to FIG. 2, operations of the schedule handler can be triggered by a component referred to as a scheduler 290. Unless the scheduler handler 150 or the scheduler 290 is specifically referred to, the term "scheduler" refers to a component having the functionality of the scheduler handler, where the schedule handler can include functionality corresponding to the scheduler 290, or includes or is used in conjunction with the scheduler 290 (that is, the term "scheduler," for example, can include both the schedule handler 150 and the scheduler 290).

The schedule handler 150 can be responsible for managing the creation and execution of schedule instances. The schedule handler 150 can call an execution engine 154 to execute scheduled instances, including subtasks thereof, including data retrieval operations associated with the pull framework 122, to retrieve data from the application 104 using the pluggable code 126. The scheduler handler 150 can use the configuration data 136 of the target service 134 in creating schedule instances based on a schedule and managing their execution, such as in calling the execution engine 154 to execute parallel subtasks or retrying failed subtasks of a schedule instance.

The scheduler handler 150 can store job status information 160. The job status information 160 can include information such as schedule instances that have been prepared, as well as status information for schedule instances, including information for particular subtasks that are associated with a schedule instance. Status information 160 can include information such as whether a particular schedule instance, or subtask thereof, is ready to be picked for execution, is pending (that is, is currently being processed), has been completed, or has failed. As will be further described, the job status information can be used to coordinate activities among multiple instances of the pull service 120, including the pull framework 122.

In at least some cases, the job status information 160 can be accessed using a user interface 168. The user interface 168, in particular implementations, can be used with other aspects of the computing environment 100, such as in providing configuration data 136 or pluggable code 126, or in defining schedules 162 used by the schedule handler 160.

The results of executing a schedule instance 164 can be used in a variety of ways, depending on a particular use scenario. In the case of the schedule handler 150 being used as part of the pull framework 122, data retrieved from the applications 104 can be obtained by a receiver 170. The receiver 170 can then push the data to a messaging system 172, such as KAFKA. A distributor 174 can obtain data from the messaging system 172 and provide the data to various recipients, such as clients 176.

It should be noted that the components of the computing environment 100 represent a particular example use case, and not all of such components are required in all uses of disclosed innovations. For example, the components 172, 174, 176 can be omitted if desired. More generally, as described in the present disclosure, components associated with scheduling and schedule handling, such as the schedule handler 150, can be used with components other than the pull service 120 and its components. Similarly, the pull service 120 can be used with scheduling functionality other than the schedule handler 150 of the present disclosure.

### Example 3 - Example Details of Pull Service and Embedded Schedule Handler

FIG. 2 illustrates a computing environment 200 that provides additional details regarding components of the computing environment 100 of FIG. 1. FIG. 2 illustrates a pull service 208, which can correspond to the pull service 120 of FIG. 1.

The pull service 208 includes a pull framework 212 and a schedule handler 214, which can correspond, respectively, to the pull framework 122 and the schedule handler 150 of FIG. 1. The schedule handler 214 is shown as including a job schedule registry 218, which can store information about job schedule instances. For example, the job schedule registry can store information about job schedule instances that have been created and status information about such job schedule instances. Status information can include information such as a time the job schedule instance should be executed, information needed to execute a job schedule instance (such as a target, an identification of pluggable code or configuration information needed to execute a job schedule instance), subtasks of a job schedule instance, and status information about a job schedule instance or subtasks thereof. Status information can include whether a job schedule instance or subtask is available to be selected for execution, is pending, has failed, and is marked for a retry attempt, has failed, and no further retry attempts should be made, or whether it has successfully been completed.

In some embodiments, multiple instances of the pull service 208 can be created, either for execution of the same job schedule instance or for executing different job schedule instances. In either case, it can be desirable for instances of the pull service 208 to share information, such as job schedule instance definitions or job schedule instance status information. Accordingly, in at least some implementations, the job schedule registry 218 is shared between multiple instances of the pull service 208. For example, the job schedule registry 218 can be a database system that store information about job schedule instances, including job schedule instance definitions or job schedule instance status information.

During job schedule instance execution, the schedule handler 214 can cause multiple executor processes to be assigned to one or more job schedule instances, including for subtasks of such job schedule instances. For example, the schedule handler 214 can include logic to assign available scheduler execution workers 224 to job schedule instances or subtasks thereof. In assigning a job schedule instance/subtask to a schedule execution worker 224, the scheduler handler 214 can access a schedule executor registry 222. The scheduler executor registry 222 can store information about job schedule instances or their subtasks that are available to be assigned to scheduler execution workers 224.

The schedule handler 214 can be responsible for creating job schedule instances 230. That is, a job can have a basic definition. In the case of use with the pull service 208, the job can include an identifier of a target, information about accessing the target, code to be executed (pluggable code) in carrying out a scheduled job instance, and information usable to select particular data from the target. However, typically individual job execution instances for the job are created as needed according to the basic job definition.

For example, assume that a job is scheduled to run every hour. Individual job schedule instances 230 may be created for each hourly occurrence, such as having a schedule instance for the job to be executed at noon, a schedule instance for the job to be executed at 1pm, etc. The process of creating job schedule instances 230 from a job definition can be referred to as "expanding" the job definition.

The job schedule instances 230 can thus store information useable for a particular execution of a scheduled job. In some cases, the stored information can include computing objects usable in job schedule instance execution, such as computing objects representing tasks to be executed as part of a job schedule instance 230 or objects useable to store information about execution of a particular job schedule instance, including a status of various subtasks of a job schedule instance. The job schedule instances 230 can be stored in persistency 228, where the persistency, and thus the job schedule instances, 230 can be accessed by multiple instances of the pull service 208.

The pull framework 212 can include a pull schedule executor 240. The pull schedule executor 240 can communicate with plugin code 260 for a particular target in creating or executing a job schedule instance 230. For example, the pull schedule executor 240 can include logic 242 to get subtasks associated with a particular job schedule instance 230. Getting subtasks can include communicating with a target to determine what data is available for collection, and how that data might be divided into subsets that can be executed in parallel. The pull schedule executor 240 can also include logic 244 to retrieve data from a target. That is, the logic 242 can be used to define subtasks for a job schedule instance 230, while the logic 244 can be used in executing such subtasks.

The pull framework 212 can also include various registries that can assist in job schedule instance definition or execution. For example, the pull framework 212 can include a target registry 250 and a target type registry 252. The target registry 250 can store information about particular targets, such as the applications 104 of FIG. 1. The information for a target in the target registry 250 can include an identifier for the target and information usable to access the target. The target type registry 252 can store information about a particular target type, such as an application type, associated with a particular target. The target type registry 252 can store information about a particular target type, such as the configuration data 136 of the target service 134 of FIG. 1.

In some cases, plugin code 260 (which can correspond to the plugin code 126 of FIG. 1) is registered with a plugin code registry 254 of the pull framework 212. Information from the plugin code registry 254 can then be stored in the target service 134. Storing information about plugin code 260, or particular targets, in the target service 134 can be beneficial, for example, by allowing different instances of the pull service 208 to obtain information about pluggable code or targets. In some cases, when a new instance of the pull service 208 is created, the target service 134 can be accessed and used to create appropriate plugin code 260 in the instance, as well as populating the target registry 250, the target type registry 252, or the plugin code registry 254.

The plugin code 260 can include functionality, such as classes, to assist in defining or executing job schedule instances 230. Logic 270 can be used to determine a number of pages (data subsets) for a particular job schedule instance 230. Logic 272 can be used to retrieve data from a target. The plugin code 260 can also include provider type information, such as in target configuration settings 274, usable in connecting to a particular target, which can correspond to information stored in the target type registry 252.

FIG. 2 illustrates a plurality of targets 280, which can correspond to the applications 104 of FIG. 1 or another type of target. In at least some implementations when a disclosed scheduler is used for pulling data, a target 280 can include logic 282 for returning a number of pages of data that are available to be transferred during an execution of a particular instance of a scheduled job. Logic 284 can be used to return data to the pull framework 212 in response to a request, such as returning data in response to a pull data request 244 from the plugin code 260.

The pull service can include a scheduler 290. The scheduler 290 can be responsible for triggering the creation of schedules or the execution of schedules. For example, the scheduler 290 can periodically call the schedule handler 214 to define job schedule instances 230. The scheduler 290 can also periodically call the schedule handler 214 to select job schedule instances 230 for execution.


**Example 4 - Example Interface and Class Definitions for Pull Framework Having Embedded Schedule Handler**

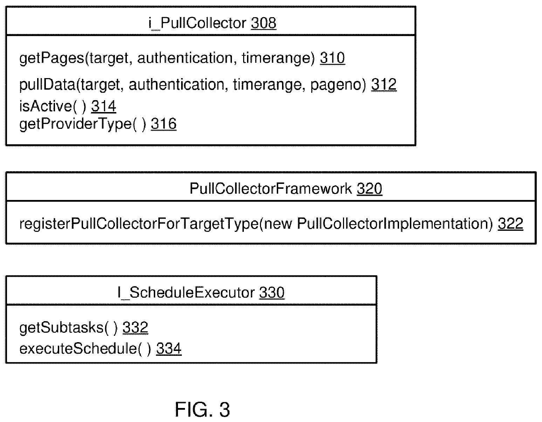

FIG. 3 provides example class definitions that can be used to implement aspects of the present disclosure. In particular, an interface definition 308 defines methods that should be implemented, such as by plugin code, to use features of a pull framework, including scheduling functionality. A getPages method 310 is used to obtain a number of pages available at a particular target. The method 310 has parameters of a target identifier, an authentication type/authentication information used to communicate with the target, and a time range of data that is desired. In the cases of a scheduler that retrieves data at fixed intervals, the time range can be defined to represent that fixed interval (such as retrieving data associated with a time range between noon and 1pm).

A pullData method 312 can be used to obtain particular data, and can include the same parameters as the method 310, but also can optionally include a page number, where a page can represent a collection of data elements received from a data target. An isActive method 314 can be used to determine whether a given pull collector is currently active, while a particular provider type associated with an instance of the pull collector interface can be obtained using the getProviderType method 316.

A class definition 320 represents a pull collector framework. The class definition 320 includes a method 322 to register a new pull collector, such as registering its plugin code, with the pull collector framework. The method 322 can take a parameter of a class that implements the interface class definition 308.

A class definition 330 represents a schedule executor that implements an interface of a scheduler. A schedule executor created according to the class definition 330 includes a method 332 to get subtasks for a schedule, such as based on information obtained from a class that implements the interface class definition 308. The class definition 330 also includes a method 334 to execute a particular job schedule instance or one of its subtasks, which can involve assessing a class that implements the interface class definition 308.

**Example 5 - Example Pull Framework Execution Process**

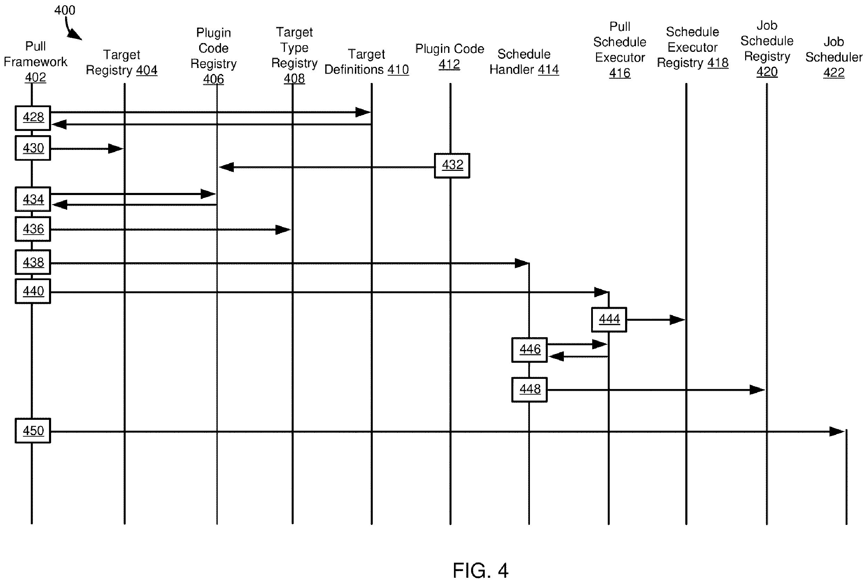

FIG. 4 is a timing diagram of a process 400 of pull framework, such as registering plugin code for particular targets with the framework and instantiating a schedule hander that can be used in executing schedule instances for such targets. The process 400 can use components of the computing environment 100 of FIG. 1 or the computing environment 200 of FIG. 2. The process 400 involves a pull framework 402 (such as the pull framework 122 or the pull framework 212), a target registry 404 (the target registry 250), a plugin code registry 406 (the plugin code registry 254), a target type registry 408 (the target type registry 252), target definitions 410 (such as in the target service 134), plugin code 412 (the plugin code 126 or plugin code 260), a schedule handler 414 (the schedule handler 150 or the schedule handler 214), a pull schedule executor 416 (the pull schedule executor 240), a schedule executor registry 418 (the schedule executor registry 222), a job schedule registry 420 (the job schedule registry 218), and a job scheduler 422 (the scheduler 290).

At 428 the pull framework reads target information from the target definitions 410, and then stores target information in the target registry 404 at 430. New code plugins, such as for pulling data from a new target, can be registered with the plugin code registry 406. As shown, the plugin code registers itself with the plugin code registry 406 at 432.

At 434, such as in response to the plugin code registration at 432, the pull framework 402 can access the plugin code 412 to retrieve target type information, which can be stored in the target type registry 404 at 436. The pull framework 402 instantiates the scheduler handler 414 at 438, which can be performed in response to the plugin code registration at 432. The pull framework can instantiate the pull schedule executor 416 at 440. At 444, the pull schedule executor 416 can register itself with the schedule executor registry 418. The schedule handler 414 can retrieve information from the pull schedule executor 416 at 446, and then store the information in the job schedule registry 420 at 448. Information in the job schedule registry 420 can be used, for example, to store schedule information that can be used in defining particular data pull processes, such as according to a particular interval specified in a job description, as well information to be retrieved in a particular data pull process.

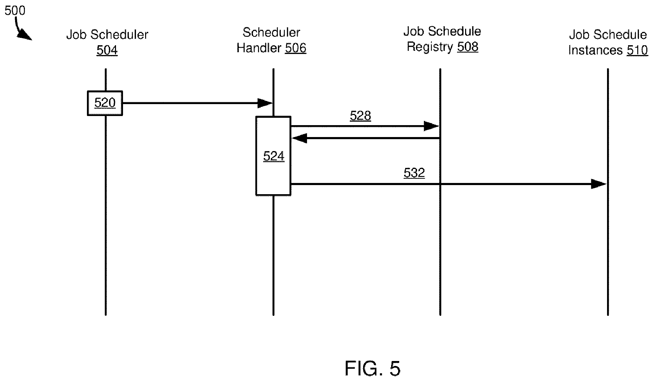

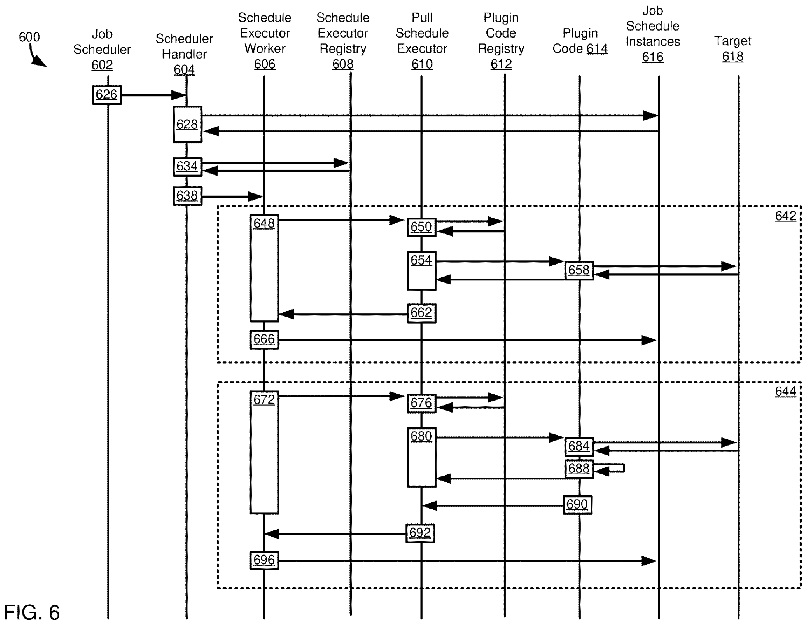

At 450, the pull framework 402 can cause the job scheduler 422 to be instantiated. The job scheduler 422 can then be used to trigger operations to create schedule instances or to execute schedule instances, as will be further described with respect to FIGS. 5 and 6.

**Example 6 - Example Scheduling Process**

FIG. 5 is a timing diagram of a process 500 of creating a schedule instance, such as using components of the computing environment 100 of FIG. 1 or the computing environment 200 of FIG. 2. The process 500 involves a job scheduler 504 (the scheduler 290), a scheduler handler 506 (the schedule handler 150 or the schedule handler 214), a job schedule registry 508 (the job schedule registry 218), and job schedule instances 510 (the schedules 162 or 230).

At 520, the job scheduler 504 sends a communication to expand a schedule to the scheduler handler 506. Typically, the process 500 is set to repeat at particular intervals. During the process 500, job schedule instances 510 can be created, which can also occur according to an interval (and where typically the interval for the process 500 is longer than an interval for an execution process, such as where the process 500 occurs hourly and where a job schedule instances 510 are executed every second).

It can be beneficial to have job schedule instances 510 be ready for execution when an execution of a job schedule instance is triggered, such as by the passing of a set time interval. As an example, consider a schedule that executes job schedule instances 510 every hour. In addition to executing an instance of the schedule every hour, the process 500 can be executed to create job schedule instances 510 to cover an upcoming five-hour period. Assume that the process 500 is first carried out at 9am. Job schedule instances 510 may be created in advance for execution at 9am, 10am, 11am, 12pm, and 1pm. When the process 500 is carried out at 10am, only the job schedule instance 510 for a 2pm execution would need to be created in order to have job schedule instances for the next five execution processes available. However, assume that the 10am job schedule instance creation process 500 fails. At 11am, the process 500 would create the job schedule instance 510 for the 2pm execution instance and the job schedule instance for the 3pm execution instance.

The schedule handler 506 expands the appropriate schedule at 524. The operations at 524 can include retrieving job definitions from the job schedule registry 508 at 528. For example, the schedule handler 506 can receive from the job schedule registry 508 information about a particular target associated with a job, such as whether parallel operations are supported or authentication information, or information about data to be obtained as part of executing a particular instance of a scheduled job (for example, defining a time range of data to be retrieved for a particular job schedule instance 510). The scheduler handler 506 can then create the job schedules 510 at 532, such as creating instances of computing objects usable to execute a job schedule instance or store definitional information for a job schedule instance in a persistency (such as in a database or as serialized computing object instances).

**Example 7 - Example Schedule Instance Execution Process**

FIG. 6 is a timing diagram of a process 600 of executing a job schedule instance, such as an instance of a scheduled process to pull data from a target. The process 600 can use components of the computing environment 100 of FIG. 1 or the computing environment 200 of FIG. 2. The process 600 involves a job scheduler 602 (the scheduler 290), a schedule handler 604 (the schedule handler 150 or the schedule handler 214), a schedule executor worker 606 (the scheduler executive worker 224), a schedule executor registry 606, (the schedule executor registry 222), a pull schedule executor 610 (the pull schedule executor 240), a plugin code registry 612 (the plugin code registry 254), plugin code 614 (the plugin code 126 or plugin code 260), job schedule instances 616 (such as the job schedule instances 230), and a target 618 (an application 104 or a target 280).

As discussed in conjunction with FIG. 6, a job schedule instance execution process 600 can be performed at specific intervals. When an interval has passed and a new job schedule instance execution process 600 is to be performed, the job scheduler 602 can communicate with the scheduler handler 604 at 626, causing the scheduler handler to pick a job schedule instance of the job schedule instances 616 for execution at 628. The selected job schedule instance 616 can be associated with a status information, such as whether a particular job schedule instance is ready to be executed (or information sufficient to determine whether the job schedule instance is ready for execution, such as an interval identifier or a timestamp). The status information can also indicate whether a particular job schedule instance has already been selected for execution, such as by another instance of a pull service or by another execution thread of a same pull service.

The operations at 628 can include selecting multiple job schedule instances 616 in a single iteration of the process 600. For example, a set number, such as 100, job schedule instances 616 can be selected every five minutes, when the process 600 is triggered every five minutes. The job schedule instances 616 to be picked can be those within a threshold time period, such as a current time plus some additional time amount, if job schedule instances can be picked in advance.

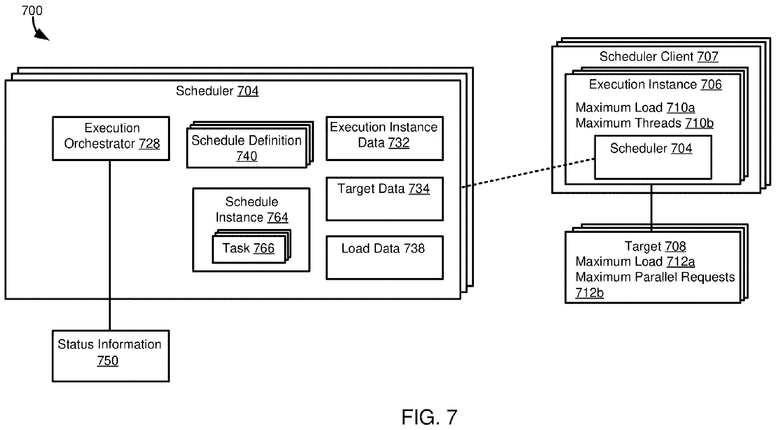

As further described with respect to FIG. 7, in at least some cases the process 600 can also pick pending job schedule instances 616 whose scheduled execution time has already passed. For example, assume that a job schedule instance 616 is to be executed every five minutes. Even if another job schedule instance 616 for the same j ob/schedule, including job schedule instances that represent subtasks of the overall job schedule instance, is ready for execution, job schedule instances from the prior iteration can be selected at 628.

Once a job schedule instance 616 is selected, status information for the job schedule instance can be updated, so that the job schedule instance is not selected by a schedule handler 604, either of a common instance of the pull framework 122 or between different instances of the pull framework.

As a particular example of the operations of 628, consider a scenario where a weighting is also applied to particular job schedule instances 616. The operations at 628, accessing a relational database, can execute the command:

$$\text{update top 100 schedule\_table set pickid='mypickid' STATUS = PICKED where}$$
$$\text{scheduled\_time} < \text{current\_time'' order desc by (weightage} + \text{timebasedweightage)}$$

This command updates a table to mark particular job schedule instances 616 as picked by a particular schedule handler 604, having an identifier of "mypickid." The scheduler handler 604 can then select its job schedule instances 616 using a command such as:

$$\text{select * from schedule\_table where pickid = 'mypickid'}$$

At 634, the scheduler handler 604 can access the schedule executor registry 608 to obtain a scheduler executive worker to be instantiated as, or assigned to, a schedule executor worker 608 at 638.

The process 600 is shown as including two subprocesses 642, 644. Subprocess 642 relates to obtaining subtasks to be performed as part of a job schedule instance, where the subtasks can be added as additional job schedule instances. Subprocess 644 relates to obtaining data as part of executing a job schedule instance 616, including one representing a subtask.

Turning first to the subprocess 642, at 648, the schedule executor worker 606 calls the pull schedule executor 610 with a request to obtain subtasks for a particular job schedule instance 616, such as by calling a "getSubTasks" method of the pull schedule executor. Note that the subprocess 642 can be omitted if a particular target 618 does not support paging/subtasks. In the event the target 618 does not support subtasks, the process 600 can proceed to subprocess 644, where the overall task corresponds to the subtasks described for the subprocess 644.

At 650, the pull schedule executor 610 then obtains information about particular plugin code 614 to be used in the subprocess 642 from the plugin code registry 612. That is, for example, the operations at 650 can be used to obtain information that can later be used to call the appropriate plugin code 126 of FIG. 1 depending on what application 104 is to be accessed.

The schedule executor 610 can then, at 654, access the plugin code 614, such as calling a "getSubTasks" method of the plugin code. The plugin code 614 can then communicate at 658 with the target 618 to obtain a number of pages (or otherwise, identifiers of job elements that can be performed separately/concurrently) for the particular job schedule instance 616. The plugin code 614 can then return this information to the pull scheduler executor 610, which can determine subtasks to be performed, where the subtasks are then returned to the schedule executor worker 606 at 662.

At 666, the scheduler executor worker 606 can update the job schedule instances 616 with information about subtasks, which can be added as new job schedule instances that are available for execution. That is, while aspects of a job schedule instance 616 can be created in advance of execution, such as using the process 500 of FIG. 5, at least in some cases a number of subtasks, and how such subtasks should be defined, may not be known, because the data associated with a particular job schedule instance may not even exist at the time of the creation of the job schedule instance.

The subprocess 644 is used for executing a job schedule instance 616, including one representing a subtask of an overall job schedule instance. At 672, the schedule executor worker 606 calls the pull schedule executor 610 with a request to obtain data for a particular job schedule instance 616 selected at 628, such as by calling a "pullData" method of the pull schedule executor. At 676, the pull schedule executor 610 then obtains information about particular plugin code 614 to be used in the subprocess 644 from the plugin code registry 612.

The schedule executor 610 can then, at 680, access the plugin code 614, such as by calling a "pullData" method of the plugin code. The plugin code 614 can then communicate at 684 with the target 618 to data associated with the selected job schedule instance 616. At 688, the plugin code 614 can perform actions such as filtering or formatting retrieved data. The plugin code 614 can return the retrieved data, including after any filtering or formatting operations, to the pull schedule executor 610 at 690. Although not shown, the pull schedule executor 610 can then provide data to another recipient, such as the receiver 170 of FIG. 1.

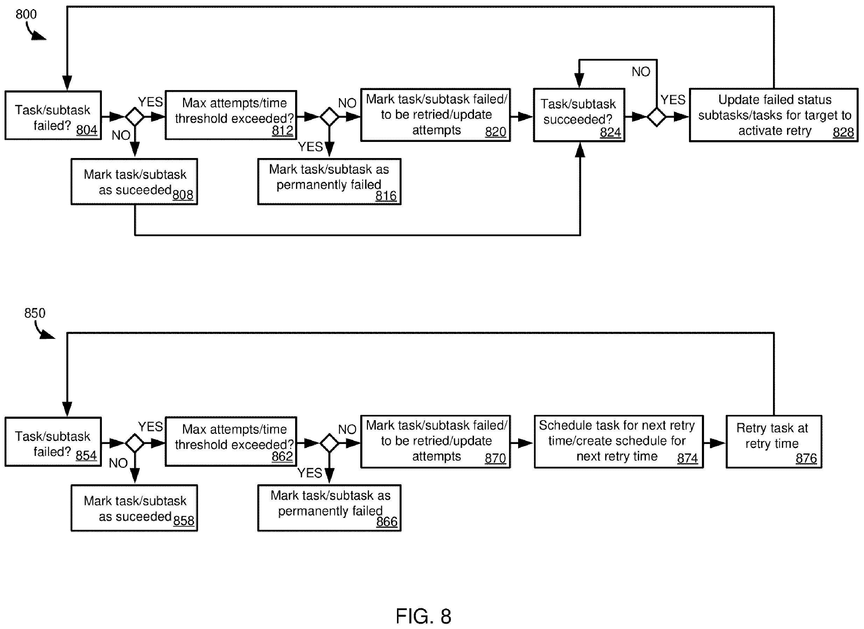

At 692, the pull schedule executor 610 can return status information to the schedule executor worker 606. For example, the status information can include whether the job schedule instance succeeded or failed. The schedule executor worker 606 can communicate with the job schedule instances 616 at 696. For example, the schedule executor worker 606 can update a status of a job schedule instance 616, such as whether the execution of the job schedule instance succeeded or failed. The schedule executor worker 606 can also indicate whether a failed job schedule instance 616 should be retried, or update a number of retries performed for a particular job schedule instance. Operations regarding failed tasks, including updating task status and the performance of retry operations, are further described with respect to FIG. 8.

**Example 8 - Example Embedded Schedule Hander for Scheduler Clients**

FIG. 7 illustrates elements of disclosed technologies at a somewhat more general level than depicted in the computing environments 100 and 200 of FIGS. 1 and 2. FIG. 7 depicts a computing environment 700 that includes a scheduler 704, a plurality of execution instances 706 of a plurality of scheduler clients 707 that are responsible for executing tasks associated with schedules, and a plurality of targets 708 on which tasks can be executed by an execution instance. Although shown as separate, in at least some cases the scheduler 704 can be a component of an execution instance 706, including where each execution instance includes its own scheduler 704.

Similarly, a given use scenario can have different execution process types, such as where different applications 104 of FIG. 1 are associated with different plugin code 126 to execute a data pull process for that application. A given execution process type can have a single execution instance 706, or can have multiple execution instances.

The execution instances 706 can include the scheduler 704, and can have appropriate code that can be called by the scheduler to initiate task execution. For example, each use scenario can implement an interface of the scheduler 704, so that the scheduler can call an executor for the scenario whenever an execution instance is to be triggered by the scheduler.

Part of the function of the scheduler 704 is to manage the execution of tasks in accordance with particular parameters that may be associated with an execution instance 706 or a target 708. For example, an execution instance 706 can be associated with particular resources, such as computing resources, and configuration information for the execution instance can specify a maximum load that can be placed on the execution instance by the scheduler 704, such as using an attribute 710a. It may also be useful to limit an overall number of execution threads at an execution instance 706, such as using an attribute 710b.

It may be similarly useful to limit a load at a target 708, or a number or parallel requests submitted to the target, such as using attributes 712a, 712b of the target 708.

The scheduler 704 can store information about the execution instances 706 and the targets 708, such as values of the attributes 710a, 710b, 712a, 712b, respectively, in execution instance data 732 and target data 734.

The scheduler 704 can include an execution orchestrator 728 that assists in executing scheduled tasks. For example, the execution orchestrator 728 can monitor a load on execution instances 706 or targets 708 to help ensure that the loads do not exceed the values specified in the attributes 710a, 712a. Similarly, the execution orchestrator 728 can monitor a number of threads at an execution instance 706 and a number of parallel requests being made to a target 708. In this regard, the execution instance data 732 and the target data 734 can store both limits associated with the execution instance and the target, but also current values for a load or number of threads/parallel requests.

The execution orchestrator 728 can perform a number of functions. For example, the execution orchestrator 728 can be responsible for assigning schedule instances 764, or subtasks 766 thereof (which can be a type of schedule instance) to an execution instance 706. In doing so, the execution orchestrator 728 can access load data 738. The load data 738 can include load information for particular schedule instances 764 or subtasks 766.

The load data 738 can be data provided in a schedule definition 740 (which can be used in creating the schedule instances 764), can be an estimated load, such as based on particular task characteristics (such as a type of data to be retrieved, a method used for accessing data, or criteria used for data selection), can be based on historical schedule instance execution (for example, assigning an initial load value to a schedule execution instance or subtask, and then refining that value based on actual execution results/performance), or can be an estimated load, such as using machine learning techniques (which can include factors such as a schedule definition 740, information about a particular target 708 (which can also include a type of the target, such as a type of application), or a day/time when a schedule instance 764 will be executed according to a schedule definition 740 - in which can the same type of schedule execution instance can be associated with different load values based on the day/time a particular schedule execution instance will be executed). Machine learning techniques can also consider resources needed to execute a schedule instance 764 or subtask 766, such as memory, processor, or network use, or a duration needed for execution.

Factors used in machine learning or other load prediction/estimation techniques can be weighted, included applying different weightings to different types of resources used in execution of schedule instances 764 or subtasks 766. In some cases, an initial load estimation can consider a limited number of factors, such as a time of execution. As data is collected during execution, such as resource use, this information can be added to improve prediction accuracy.

When a schedule instance 764 or task 766 is to be executed, the execution orchestrator 728 can determine if its associated execution instance 706 has sufficient capacity (load or threads) to handle the associated load. If so, the execution orchestrator 728 can select the schedule instance 764 or subtask 766 to be performed by the associated execution instance 706. However, the execution orchestrator 728 can also check to ensure that such execution will not cause a capacity (load or number of concurrent operations) of the target 708 to be exceeded. That is, a schedule instance 764 or subtask 766 may not be selected for execution by an execution instance 706 even if the execution instance has sufficient capacity if the target 708 does not have sufficient capacity. Or, even if the target 708 has sufficient capacity, the schedule instance 764/subtask 766 will not be selected by a particular execution orchestrator 728 for its execution instance 706 if the execution instance does not have sufficient capacity.

The execution orchestrator 728 (or, some cases, similar functionality of an execution instance 706) can be responsible for instantiating or deleting execution instances 706 according to a current workload. That is, for example, if a set of execution instances 706 do not have sufficient capacity to execute a current workload, additional execution instances can be created. On the other hand, if a set of execution instances 706 is not sufficiently utilized, one or more of the execution instances can be deleted.

In some cases, creation of a new execution instance 706 is performed by any particular scheduler 704, but deletion of an execution instance is performed by the particular execution instance being deleted. That is, if the scheduler 704 determines that its resources are underutilized, it can cause the execution instance 706 to be deinstantiated.

Different schedule instances 764, and in some cases subtasks 766, can be associated with heavier or lighter loads, such as computing resource use at an execution instance 706 or at a target 708. Accordingly, it can be beneficial to associate schedule instances 764 or subtasks 766 with different values for a load factor. For example, a value of "1" can be a default value for a load, values less than 1 can be used for lighter loads, and values higher than 1 can be used for heavier, more resource-intensive loads. A load factor value can be, in some cases, determined from the load data 738. In other cases, a load factor value can be manually assigned to a load. Optionally, load factor values can be updated based on data collected during execution of a schedule instance 764, such as by tracking the resources used at an execution instance 706 or a target 708 during execution.

The load factor value can also be used in determining how many threads to create at an execution instance 706, or how many parallel requests to make to a target 708 (which can be a limit that applies to all execution instances that might access the target, including for different schedule instances 764 which may seek to access data in the target). For example, assume an execution instance 706 has a maximum load factor value of 50, and the value for the maximum threads 710b is also 50. In the event an execution instance 706 or subtask 766 has a load factor of 1, 50 threads would be created. In the event each execution instance or subtask 766 has a load factor of 10, only 5 threads would be created, even though the value for the maximum threads 710b is much higher.

The execution orchestrator 728 can also prioritize schedule instances 764 according to various criteria. For example, different priorities can be assigned to an initial execution of a schedule instance 764 compared with an attempt to retry a previously failed schedule instance or one of its subtasks 766. Schedule instances can also be prioritized according to a scheduled execution time, including to ignore schedule instances 764, or subtasks 766 thereof, that remain unexecuted after a defined period after their scheduled execution time. Prioritization can also be based on the identity of a particular target 708 or other factors, such as a manually assigned priority level or a priority level determined from information associated with a schedule instance 764, such as an identifier of a user or process who defined the associated schedule definition 740. As has been described, in executing a schedule instance 764, subtasks 766 can be created, such as to allow for parallel execution. When a subtask 766 is created, in at least some cases, it is assigned the same priority as the associated schedule instance 764.

As has previously been discussed, disclosed techniques can include functionality to retry failed schedule instances 764 or subtasks 766. Retrying failed schedule instances 764 or subtasks 766 can be a function of the execution orchestrator 728. For example, the execution orchestrator 728 can access and modify status information 750. The status information 750 can include information useable to identify whether a particular schedule instance 764 or subtask 766 is ready to be scheduled, has been selected for execution by an execution instance 706, or has failed. For failed schedule instances 764 or subtasks 766, the status information 750 can include a number of retry attempts that have been made or a total number of retry attempts remaining, if a retry process for a schedule instance/subtask is subject to a limitation.

Optionally, the status information 750 can include a retry policy to be used, or this information can be included in the schedule definitions 740. As has been described, one retry policy can be to retry a failed schedule instance 764 or subtask 766 at fixed intervals, including as might be modified by priority considerations. Another retry policy can be to retry a failed schedule instance 764 or subtask 766 when another subtask 766 of schedule instance 764 has succeeded. Alternatively, a schedule instance 764 (or subtask 766) can be tried once another schedule instance or subtask thereof has been successfully performed for the same target 708. In the case of subtasks 766, multiple subtasks can be in a failed state, and all such subtasks can be changed from a failed or retry pending status to a status indicating that the subtasks are ready to be assigned to an execution instance 706 (including a particular thread thereof).

In some cases, it can be explicitly determined that a schedule instance 764 or subtask 766 has failed. For example, a process can return an error indicating a failure. However, schedule instances 764 or subtasks 766 can be considered as failed, or at least returned to a pool for selection by another execution instance 706 or thread thereof, based on other considerations. For example, schedule instances 764 or subtasks 766 that have been in an "in process" state for longer than a threshold time can be marked as failed or otherwise returned to a pool for execution.

In some cases, it can be useful to reassign schedule instances 764 or subtasks 766 to the same execution instance 706, and so this information can be maintained for failed or "aborted" schedule instances or subtasks as described above, and used by execution instances in selecting schedule instances or subtasks to execute. Note that an execution delay can be due to either the execution instance 706 or a target 708. In some cases, these delays can be tracked separately and used for marking schedule instances 764 or subtasks 766 as failed or otherwise returning them to a pool to be selected for execution.

For the computing environment 700, an example definition of a schedule definition 740 can have attributes including:

- Job ID
- Tenant ID
- Job Description
- Job Interval in Seconds
- Does Job Supports Subtasks
- Max Parallel Tasks Allowed
- Retry Policy
- Retry Last Failed on Success
- Retry at Regular Interval
- Number Of Retries Before Failing
- Retry Interval in Seconds
- Ignore Jobs Before Seconds
- Resource Type
- Job Priority - 1 to n where 1 is the highest priority

- Approximate execution duration
- Job Attributes (Key, Value)
- Start Time of first schedule
- Is Job Active
- Is Job Deleted

The schedule definitions 740, such as through a schedule expansion process as has been described, can be used to create schedule instances 764. For the computing environment 700, an example subtask 766 of a schedule instance 764 can include one or more of the following attributes, which can be stored in the status information 750:

- Job ID
- Tenant ID
- Scheduled Time
- Schedule Status
- Pick ID (such as an identifier of an execution instance 706 or a thread thereof)
- Retry Attempts Made
- Subtask Number
- Start Time
- End Time
- Status Text
- Load Weightage

Although the scheduler 704 is shown as part of an execution instance 706 of a particular scheduler client 707, in other cases clients and their execution instances can use a scheduler 704 that is a component separate from the scheduler client. In a particular example of this type of implementation, each execution instance 706 can be associated with a different instance of the scheduler 704. Or, a single scheduler 704 can be configured to perform scheduling for multiple execution instances 706. In these implementations, multiple scheduler instances 704 or a common scheduler instance can share (such as via a cache or other type of data store or shared memory) information such as a number of tasks executing on an execution instance 706, a number of tasks executing on a particular target 708, and task status information.

**Example 9 - Example Embedded Schedule Hander for Scheduler Clients**

FIG. 8 illustrates flowcharts of two example processes 800, 850 for retrying failed tasks or subtasks, where the term task is used for the remainder of the discussion, but the discussion applies also to subtasks. In the process 800, it is determined at 804 whether a given task for a particular target has failed. If not, the task can be marked as succeeded at 808.

If it is determined at 804 that the task failed, it can be determined at 812 whether a maximum number of attempts to complete the tasks has been reached, or if the task is older than a threshold time. If the maximum number of attempts to complete a task has been reached, or the task is older than the threshold time, the task can be marked at permanently failed at 816.

At, 820, if the maximum number of attempts has not been reached, or the task is not older than the threshold time, the task can be marked as to be retried and, if the task previously had failed, a number of retry attempts can be incremented. It can be determined at 824 whether another task has completed for the particular target of the failed task. For example, it can be determined whether another task for the target has been marked as succeeded at 808. If another task for the target completed successfully, at 828, other failed tasks that are scheduled to be retried upon the successful completion of another task for the target have their status updated, such as to "ready to be picked." The task can then be picked by a worker process, and the process 800 can return to 804. If it is determined at 824 that another task for the target has not completed, the process 800 can return to 820 until it is determined that a task for the target completed.

The process 850 is similar to the process 800. At 854, it is determined whether a particular task has failed. If the task did not fail, it can be marked as succeeded (or completed) at 858. If the task failed, it can be determined at 862 whether a maximum number of attempts to execute the task has been reached, or whether a threshold time has passed. If so, the task can be marked as permanently failed at 866.

If the maximum number of attempts has not been reached, or the threshold time has not been exceeded, the process 850 can mark the task as failed or, if the task previously had failed, update a number of retry attempts for the task at 870. At 874, depending on implementation, the failed task can be scheduled for execution (such as a "ready to be picked" status) during a next retry time (execution interval), or the failed task can be added to a new schedule that will be executed at the next retry time. The task is retried at 876, and the process 850 returns to 854.

Note that, in general, task status information can be used to control a number of tasks being executed concurrently, for various limits, such as for limit set for an instance of a pull service or a limit on a number of parallel tasks for a particular target. That is, tasks can be placed in a "to be scheduled" status. When a task finishes, another task can have its task updated from the "to be scheduled" status, to a "scheduled status," where workers can pick tasks having a scheduled status. The change from the "to be scheduled status" to the "scheduled" status can be associated with the operation 828 of the process 800 or the operation 874 of the process 850. In this way, a scheduler can ensure that a target number of concurrent tasks is not exceeded, and can also help maximize use of the scheduler, so that tasks are available to be picked by available workers.

**Example 10 - Computing Systems**

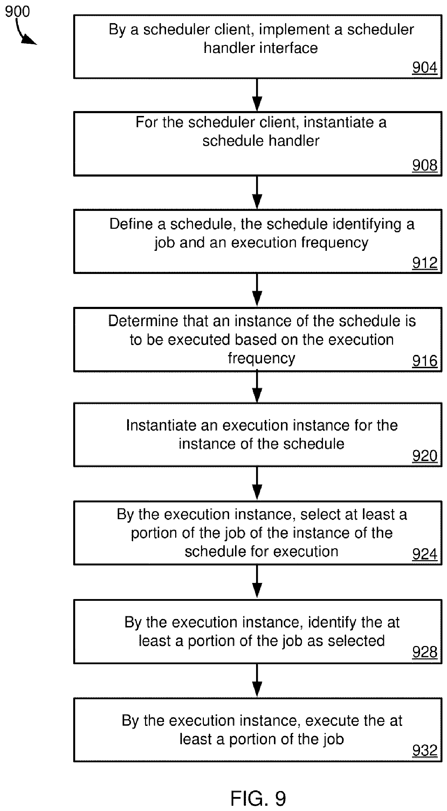

FIG. 9 is a flowchart of a process 900 of executing a scheduled job. At 904, a schedule handler interface is implemented by a scheduler client. A schedule handler is instantiated for the scheduler client at 908. At 912, a schedule is defined that identifies a job and an execution frequency.

It is determined at 916 that an instance of the schedule is to be executed based on the execution frequency. An execution instance for the instance of the schedule handler is instantiated at 920.

At 924, at least a portion of the job of the instance of the schedule is selected by the execution instance for execution. The execution instance identifies, at 928, the at least the portion of the job as selected. At 932, the execution instance executes the at least the portion of the job.

**Example 11 - Computing Systems**

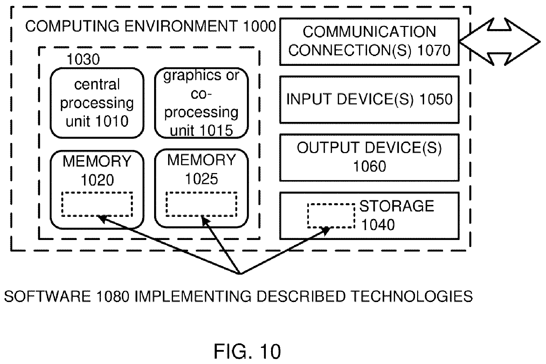

FIG. 10 depicts a generalized example of a suitable computing system 1000 in which the described innovations may be implemented. The computing system 1000 is not intended to suggest any limitation as to scope of use or functionality of the present disclosure, as the innovations may be implemented in diverse general-purpose or special-purpose computing systems.

With reference to FIG. 10, the computing system 1000 includes one or more processing units 1010, 1015 and memory 1020, 1025. In FIG. 10, this basic configuration 1030 is included within a dashed line. The processing units 1010, 1015 execute computer-executable instructions, such as for implementing components of the processes of the present disclosure. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 10 shows a central processing unit 1010 as well as a graphics processing unit or co-processing unit 1015. The tangible memory 1020, 1025 may be volatile memory (e.g., registers, cache, RAM), non-volatile memory (e.g., ROM, EEPROM, flash memory, etc.), or some combination of the two, accessible by the processing unit(s) 1010, 1015. The memory 1020, 1025 stores software 1080 implementing one or more innovations described herein, in the form of computer-executable instructions suitable for execution by the processing unit(s) 1010, 1015. The memory 1020, 1025, may also store settings or settings characteristics, databases, data sets, interfaces, displays, object instances, or model.

A computing system 1000 may have additional features. For example, the computing system 1000 includes storage 1040, one or more input devices 1050, one or more output devices 1060, and one or more communication connections 1070. An interconnection mechanism (not shown) such as a bus, controller, or network interconnects the components of the computing system 1000. Typically, operating system software (not shown) provides an operating environment for other software executing in the computing system 1000, and coordinates activities of the components of the computing system 1000.

The tangible storage 1040 may be removable or non-removable, and includes magnetic disks, magnetic tapes or cassettes, CD-ROMs, DVDs, or any other medium which can be used to store information in a non-transitory way, and which can be accessed within the computing system 1000. The storage 1040 stores instructions for the software 1080 implementing one or more innovations described herein.

The input device(s) 1050 may be a touch input device such as a keyboard, mouse, pen, or trackball, a voice input device, a scanning device, or another device that provides input to the computing system 1000. The output device(s) 1060 may be a display, printer, speaker, CD-writer, or another device that provides output from the computing system 1000.

The communication connection(s) 1070 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc., that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

**Example 12** - **Cloud Computing Environment**

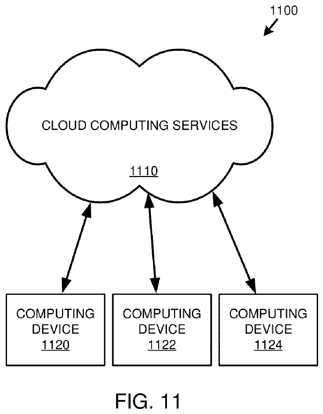

FIG. 11 depicts an example cloud computing environment 1100 in which the described technologies can be implemented. The cloud computing environment 1100 comprises cloud computing services 1110. The cloud computing services 1110 can comprise various types of cloud computing resources, such as computer servers, data storage repositories, networking resources, etc. The cloud computing services 1110 can be centrally located (e.g., provided by a data center of a business or organization) or distributed (e.g., provided by various computing resources located at different locations, such as different data centers and/or located in different cities or countries).

The cloud computing services 1110 are utilized by various types of computing devices (e.g., client computing devices), such as computing devices 1120, 1122, and 1124. For example, the computing devices (e.g., 1120, 1122, and 1124) can be computers (e.g., desktop or laptop computers), mobile devices (e.g., tablet computers or smart phones), or other types of computing devices. For example, the computing devices (e.g., 1120, 1122, and 1124) can utilize the cloud computing services 1110 to perform computing operations (e.g., data processing, data storage, and the like).

**Example 13 - Implementations**

Although the operations of some of the disclosed methods are described in a particular, sequential order for convenient presentation, it should be understood that this manner of description encompasses rearrangement, unless a particular ordering is required by specific language set forth. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 10, computer-readable storage media include memory 1020 and 1025, and storage 1040. The term computer-readable storage media does not include signals and carrier waves. In addition, the term computer-readable storage media does not include communication connections (e.g., 1070).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. It should be understood that the disclosed technology is not limited to any specific computer language or program. For instance, the disclosed technology can be implemented by software written in C++, Java, Perl, JavaScript, Python, Ruby, ABAP, SQL, Adobe Flash, or any other suitable programming language, or, in some examples, markup languages such as html or XML, or combinations of suitable programming languages and markup languages. Likewise, the disclosed technology is not limited to any particular computer or type of hardware.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

In view of the above, the present application may disclose the following items:

Item 1. A computing system comprising:

at least one hardware processor;
at least one memory coupled to the at least one hardware processor;
one or more computer-readable storage media storing computer-executable instructions that, when executed, cause the computing system to perform operations comprising:

by a scheduler client, implementing a scheduler handler interface;
for the scheduler client, instantiating a schedule handler;
defining a schedule, the schedule identifying a job and an execution frequency;
determining that an instance of the schedule is to be executed based on the execution frequency;
instantiating an execution instance for the instance of the schedule;
by the execution instance, selecting at least a portion of the job of the instance of the schedule for execution;
by the execution instance, identifying the at least a portion of the job as selected; and
by the execution instance, executing the at least a portion of the job.

Item 2. The computing system of item 1, the operations further comprising:

by the execution instance, determining a load associated with the at least a portion of the job; and
by the execution instance, determining that the execution instance has sufficient capacity to execute the at least a portion of the job;
wherein the selecting at least a portion of the job of the instance of the schedule for execution is performed in response to determining that the execution instance has sufficient capacity to execute the job.

Item 3. The computing system of item 1 or 2, wherein the job comprises a plurality of subtasks and the at least a portion of the job comprises one or more subtasks of the plurality of subtasks.

Item 4. The computing system of any one of the preceding items, wherein the execution instance is a first execution instance and the at least a portion of the job is an at least a first portion of the job, the operations further comprising: instantiating a second execution instance for at least a second portion of the job, the at least a second portion of the job being different than the at least a first portion of the job.

Item 5. The computing system of any one of the preceding items, the operations further comprising:
determining that a target on which the job is executed has sufficient resources to accommodate parallelized operations of the job.

Item 6. The computing system of any one of the preceding items, the operations further comprising:
providing access to job instance status information to the first execution instance and the second execution instance.

Item 7. The computing system of any one of the preceding items, the operations further comprising:

determining that at least a first portion of the job has failed; and
updating a status of the at least a first portion of the job in the job instance status information to indicate that the job has failed.

Item 8. The computing system of any one of the preceding items, wherein identifying the at least a portion of the job as selected comprising updating a status of the at least a first portion of the job in the job instance status information.

Item 9. The computing system of any one of the preceding items, wherein the at least a portion of the job is executed by a first execution thread of a plurality of execution threads of the execution instance.

Item 10. The computing system of any one of the preceding items, wherein the at least a portion of the job is an at least a first portion of the job and at least a second portion of the job is executed by a second execution thread of the plurality of execution threads.

Item 11. The computing system of any one of the preceding items, wherein the at least a second portion of the job is executed by a second execution thread of the plurality of execution threads in response to determining that the execution instance has sufficient resources to execute the second execution thread.

Item 12. The computing system of any one of the preceding items, wherein the at least a second portion of the job is executed by the second execution thread of the plurality of execution threads in response to determining that a target on which the job is executed has sufficient resources to accommodate parallelized operations of the job.

Item 13. The computing system of any one of the preceding items, wherein a number of execution threads assigned to the at least a portion of the job is determined at least in part based on a load associated with the at least a portion of the job.

Item 14. The computing system of any one of the preceding items, wherein the load is a predicted load.

Item 15. The computing system of any one of the preceding items, the operations further comprising:

at defined intervals, expanding the schedule to create a plurality of schedule instances to be executed over an interval period; and
storing the plurality of schedule instances in storage;
wherein selecting at least a portion of the job of the instance of the schedule for execution comprises retrieving a schedule instance from the storage.

Item 16. The computing system of any one of the preceding items, wherein the execution instance is created from an execution definition that implements an interface defined by the scheduler handler.

Item 17. The computing system of any one of the preceding items, wherein the interface comprises a method to determine subtasks associated with a schedule instance and a method to execute the at least a portion of the job, including any subtasks comprised within the at least a portion of the job.

Item 18. The computing system of any one of the preceding items, the operations further comprising:

determining an execution instance type associated with the job;
wherein instantiating an execution instance for the instance of the schedule comprises instantiating an execution instance of the execution instance type.

Item 19. A method, implemented in a computing system comprising at least one hardware processor and at least one memory coupled to the at least one hardware processor, the method comprising:

by a scheduler client, implementing a scheduler handler interface;

for the scheduler client, instantiating a schedule handler;
defining a schedule, the schedule identifying a job and an execution frequency;
determining that an instance of the schedule is to be executed based on the execution frequency;
instantiating an execution instance for the instance of the schedule;
by the execution instance, selecting at least a portion of the job of the instance of the schedule for execution;
by the execution instance, identifying the at least a portion of the job as selected; and
by the execution instance, executing the at least a portion of the job.

Item 20. One or more computer-readable storage media comprising:

computer-executable instructions that, when executed by a computing system comprising at least one hardware processor and at least one memory coupled to the at least one hardware processor, cause the computing system to, by a scheduler client, implement a scheduler handler interface;
computer-executable instructions that, when executed by the computing system, cause the computing system to, for the scheduler client, instantiate a schedule handler;
computer-executable instructions that, when executed by the computing system, cause the computing system to define a schedule, the schedule identifying a job and an execution frequency;
computer-executable instructions that, when executed by the computing system, cause the computing system to determine that an instance of the schedule is to be executed based on the execution frequency;
computer-executable instructions that, when executed by the computing system, cause the computing system to instantiate an execution instance for the instance of the schedule;
computer-executable instructions that, when executed by the computing system, cause the computing system to, by the execution instance, select at least a portion of the job of the instance of the schedule for execution;
computer-executable instructions that, when executed by the computing system, cause the computing system to, by the execution instance, identify the at least a portion of the job as selected; and
computer-executable instructions that, when executed by the computing system, cause the computing system to, by the execution instance, execute the at least a portion of the job.

**Claims**

1. A computing system comprising:

   at least one hardware processor;
   at least one memory coupled to the at least one hardware processor;
   one or more computer-readable storage media storing computer-executable instructions that, when executed, cause the computing system to perform operations comprising:

   by a scheduler client, implementing a scheduler handler interface;
   for the scheduler client, instantiating a schedule handler;
   defining a schedule, the schedule identifying a job and an execution frequency;
   determining that an instance of the schedule is to be executed based on the execution frequency;
   instantiating an execution instance for the instance of the schedule;
   by the execution instance, selecting at least a portion of the job of the instance of the schedule for execution;
   by the execution instance, identifying the at least a portion of the job as selected; and
   by the execution instance, executing the at least a portion of the job.

2. The computing system of claim 1, the operations further comprising:

   by the execution instance, determining a load associated with the at least a portion of the job; and
   by the execution instance, determining that the execution instance has sufficient capacity to execute the at least a portion of the job;
   wherein the selecting at least a portion of the job of the instance of the schedule for execution is performed in response to determining that the execution instance has sufficient capacity to execute the job.

3. The computing system of claim 1 or 2, wherein the job comprises a plurality of subtasks and the at least a portion of the job comprises one or more subtasks of the plurality of subtasks;
   and/or

wherein the execution instance is a first execution instance and the at least a portion of the job is an at least a first portion of the job, the operations further comprising:
instantiating a second execution instance for at least a second portion of the job, the at least a second portion of the job being different than the at least a first portion of the job.

4. The computing system of any one of the preceding claims, the operations further comprising:

   determining that a target on which the job is executed has sufficient resources to accommodate parallelized operations of the job;
   and/or
   the operations further comprising:
   providing access to job instance status information to the first execution instance and the second execution instance.

5. The computing system of any one of the preceding claims, the operations further comprising:

   determining that at least a first portion of the job has failed; and
   updating a status of the at least a first portion of the job in the job instance status information to indicate that the job has failed;
   and/or
   wherein identifying the at least a portion of the job as selected comprising updating a status of the at least a first portion of the job in the job instance status information.

6. The computing system of any one of the preceding claims, wherein the at least a portion of the job is executed by a first execution thread of a plurality of execution threads of the execution instance.

7. The computing system of any one of the preceding claims, wherein the at least a portion of the job is an at least a first portion of the job and at least a second portion of the job is executed by a second execution thread of the plurality of execution threads.

8. The computing system of any one of the preceding claims, wherein the at least a second portion of the job is executed by a second execution thread of the plurality of execution threads in response to determining that the execution instance has sufficient resources to execute the second execution thread.

9. The computing system of any one of the preceding claims, wherein the at least a second portion of the job is executed by the second execution thread of the plurality of execution threads in response to determining that a target on which the job is executed has sufficient resources to accommodate parallelized operations of the job.

10. The computing system of any one of the preceding claims, wherein a number of execution threads assigned to the at least a portion of the job is determined at least in part based on a load associated with the at least a portion of the job; wherein the load is optionally a predicted load.

11. The computing system of any one of the preceding claims, the operations further comprising:

    at defined intervals, expanding the schedule to create a plurality of schedule instances to be executed over an interval period; and
    storing the plurality of schedule instances in storage;
    wherein selecting at least a portion of the job of the instance of the schedule for execution comprises retrieving a schedule instance from the storage;
    and/or
    wherein the execution instance is created from an execution definition that implements an interface defined by the scheduler handler.

12. The computing system of any one of the preceding claims, wherein the interface comprises a method to determine subtasks associated with a schedule instance and a method to execute the at least a portion of the job, including any subtasks comprised within the at least a portion of the job.

13. The computing system of any one of the preceding claims, the operations further comprising:

determining an execution instance type associated with the job;

wherein instantiating an execution instance for the instance of the schedule comprises instantiating an execution instance of the execution instance type.

14. A method, implemented in a computing system comprising at least one hardware processor and at least one memory coupled to the at least one hardware processor, the method comprising:

by a scheduler client, implementing a scheduler handler interface;

for the scheduler client, instantiating a schedule handler;

defining a schedule, the schedule identifying a job and an execution frequency;

determining that an instance of the schedule is to be executed based on the execution frequency;

instantiating an execution instance for the instance of the schedule;

by the execution instance, selecting at least a portion of the job of the instance of the schedule for execution;

by the execution instance, identifying the at least a portion of the job as selected; and

by the execution instance, executing the at least a portion of the job.

15. One or more computer-readable storage media comprising:

computer-executable instructions that, when executed by a computing system comprising at least one hardware processor and at least one memory coupled to the at least one hardware processor, cause the computing system to, by a scheduler client, implement a scheduler handler interface;

computer-executable instructions that, when executed by the computing system, cause the computing system to, for the scheduler client, instantiate a schedule handler;

computer-executable instructions that, when executed by the computing system, cause the computing system to define a schedule, the schedule identifying a job and an execution frequency;

computer-executable instructions that, when executed by the computing system, cause the computing system to determine that an instance of the schedule is to be executed based on the execution frequency;

computer-executable instructions that, when executed by the computing system, cause the computing system to instantiate an execution instance for the instance of the schedule;

computer-executable instructions that, when executed by the computing system, cause the computing system to, by the execution instance, select at least a portion of the job of the instance of the schedule for execution;

computer-executable instructions that, when executed by the computing system, cause the computing system to, by the execution instance, identify the at least a portion of the job as selected; and

computer-executable instructions that, when executed by the computing system, cause the computing system to, by the execution instance, execute the at least a portion of the job.

Application 3 104c
Interface 108
Data 110
112
114

Application 2 104b
Interface 108
Data 110
112
114

Application 1 104a
Interface 108
Data 110
112
114

Pull Service 120

Pull Framework 122

Plugin Repository 125
Application 1 Plugin Code 126a
Application 2 Plugin Code 126b
Application 3 Plugin Code 126c

Execution Engine 154

Schedule 162
Schedule Instance 164

Schedule Handler 150
Job Status 160

User Interface 168

Target Service 134
Configuration Data 136

Configuration Object 140
Provider Type 144a
Service Type 144b
Schedule Frequency 144c
Retry Policy 144d
Paging Supported 144e
Max Parallel Calls 144f
Datacenter 144g
Authentication Type 144h

Receiver 170

Messaging System 172

Distributor 174

Client 176

100

FIG. 1

FIG. 2

| i_PullCollector 308 |
|---|
| getPages(target, authentication, timerange) 310 |
| pullData(target, authentication, timerange, pageno) 312<br>isActive( ) 314<br>getProviderType( ) 316 |

| PullCollectorFramework 320 |
|---|
| registerPullCollectorForTargetType(new PullCollectorImplementation) 322 |

| I_ScheduleExecutor 330 |
|---|
| getSubtasks( ) 332<br>executeSchedule( ) 334 |

FIG. 3

EP 4 517 526 A1

FIG. 4

FIG. 5

FIG. 6

FIG. 7

Task/subtask failed? 804 —YES→ Max attempts/time threshold exceeded? 812 —NO→ Mark task/subtask failed/to be retried/update attempts 820 → Task/subtask succeeded? 824 —YES→ Update failed status subtasks/tasks for target to activate retry 828

NO

Mark task/subtask as suceeded 808

YES

Mark task/subtask as permanently failed 816

NO

850

Task/subtask failed? 854 —YES→ Max attempts/time threshold exceeded? 862 —NO→ Mark task/subtask failed/to be retried/update attempts 870 → Schedule task for next retry time/create schedule for next retry time 874 → Retry task at retry time 876

NO

Mark task/subtask as suceeded 858

YES

Mark task/subtask as permanently failed 866

FIG. 8

900

By a scheduler client, implement a scheduler
handler interface

904

↓

For the scheduler client, instantiate a
schedule handler

908

↓

Define a schedule, the schedule identifying a
job and an execution frequency

912

↓

Determine that an instance of the schedule is
to be executed based on the execution
frequency

916

↓

Instantiate an execution instance for the
instance of the schedule

920

↓

By the execution instance, select at least a
portion of the job of the instance of the
schedule for execution

924

↓

By the execution instance, identify the at
least a portion of the job as selected

928

↓

By the execution instance, execute the at
least a portion of the job

932

FIG. 9

EP 4 517 526 A1

COMPUTING ENVIRONMENT 1000

1030

central processing unit 1010

graphics or co-processing unit 1015

MEMORY 1020

MEMORY 1025

COMMUNICATION CONNECTION(S) 1070

INPUT DEVICE(S) 1050

OUTPUT DEVICE(S) 1060

STORAGE 1040

SOFTWARE 1080 IMPLEMENTING DESCRIBED TECHNOLOGIES

FIG. 10

1100

CLOUD COMPUTING SERVICES

1110

| COMPUTING DEVICE 1120 | COMPUTING DEVICE 1122 | COMPUTING DEVICE 1124 |
| --- | --- | --- |

FIG. 11

**EP 4 517 526 A1**

Europäisches
Patentamt
European
Patent Office
Office européen
des brevets

# EUROPEAN SEARCH REPORT

Application Number

EP 24 18 4525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "cron - Wikipedia", , 15 August 2023 (2023-08-15), pages 1-10, XP093233294, Retrieved from the Internet: URL:https://en.wikipedia.org/w/index.php?title=Cron&oldid=1170574835 [retrieved on 2024-12-12] | 1,14,15 | INV. G06F9/48 |
| A | * the whole document * | 2-13 | |
| X | Anonymous: "Kafka Connect ¦ Confluent Documentation", , 1 August 2023 (2023-08-01), pages 1-9, XP093233576, Retrieved from the Internet: URL:https://web.archive.org/web/20230801041347/https://docs.confluent.io/platform/current/connect/index.html [retrieved on 2024-12-12] * the whole document * | 1-15 | |
| | | | TECHNICAL FIELDS SEARCHED (IPC) |
| X | Anonymous: "Guide for Kafka Connector Developers ¦ Confluent Documentation", , 1 August 2023 (2023-08-01), pages 1-16, XP093233733, Retrieved from the Internet: URL:https://web.archive.org/web/20230801042137/https://docs.confluent.io/platform/current/connect/devguide.html [retrieved on 2024-12-12] * the whole document * | 1-15 | G06F |

-/--

The present search report has been drawn up for all claims

| Place of search | Date of completion of the search | Examiner |
|---|---|---|
| The Hague | 12 December 2024 | Alecu, Mihail |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................................

& : member of the same patent family, corresponding
    document

EPO FORM 1503 03.82 (P04C01)

Europäisches
Patentamt

European
Patent Office

Office européen
des brevets

# EUROPEAN SEARCH REPORT

**Application Number**

EP 24 18 4525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Kafka Consumer configuration reference ¦ Confluent Documentation", , 1 August 2023 (2023-08-01), pages 1-31, XP093233802, Retrieved from the Internet: URL:https://web.archive.org/web/2023080107 5510/https://docs.confluent.io/platform/cu rrent/installation/configuration/consumer- configs.html#cp-config-consumer [retrieved on 2024-12-12] * the whole document * - - - - - | 1-15 | |
| X | Anonymous Jdbc ET AL: "JDBC Source Connector Configuration Properties ¦ Confluent Documentation", , 30 March 2023 (2023-03-30), pages 1-9, XP093233811, Retrieved from the Internet: URL:https://web.archive.org/web/2023033014 4654/https://docs.confluent.io/kafka-conne ctors/jdbc/current/source-connector/source _config_options.html [retrieved on 2024-12-12] * the whole document * - - - - - | 1-15 | **TECHNICAL FIELDS SEARCHED (IPC)** |

The present search report has been drawn up for all claims

| Place of search | Date of completion of the search | Examiner |
|---|---|---|
| The Hague | 12 December 2024 | Alecu, Mihail |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)